# EUROPÄISCHE PATENTANMELDUNG

(11) **EP 2 287 021 A2**
(43) Veröffentlichungstag der Anmeldung: **23.02.2011**
(21) Anmeldenummer: 09015537.5
(22) Anmeldetag: 16.12.2009
(51) Int. Cl.: B60C 23/04

(54) **Überwachungssystem für luftbereifte Fahrzeuge**

(30) Priorität: 20.08.2009 DE 202009011330 U
(71) Anmelder: Richter, Siegfried, 88605 Sauldorf-Rast (DE)
(72) Erfinder: Richter, Siegfried, 88605 Sauldorf-Rast (DE)
(74) Vertreter: Neymeyer, Franz

(57) **Zusammenfassung**

Überwachungssystem für luftbereifte Fahrzeuge, insbesondere Kraftfahrzeuge, bei denen die Räder (R1 bis R6) mit programmierbaren elektronischen Sensoren (SDS1 bis DS6) für den Luftdruck des Reifens ausgestattet sind, welche ihre Messdaten jeweils an eine elektronische Datenverarbeitungseinheit senden, in welcher die Messdaten mit bereits gespeicherten Referenzdaten in Beziehung gesetzt und zur Erstellung und Anzeige von Kontrolldaten verarbeitet werden. Um mit dem eingangs genannten Überwachungssystem für luftbereifte Fahrzeuge das Gewicht von Zuladungen auf einfache Weise, insbesondere ohne zusätzliche Hilfsmittel ermitteln und dokumentieren zu können, ist vorgesehen, dass als Referenzdaten die Luftdruckmesswerte einzelner Reifen in einem Referenzzustand des Fahrzeugs in der Datenverarbeitungseinheit (DVE) hinterlegt werden und dass als Messdaten die Luftdruckmesswerte derselben Reifen in einem vom Referenzzustand abweichenden, beladenen Kontrollzustand des Fahrzeugs in die Datenverarbeitungseinheit übertragen werden und dass die Datenverarbeitungseinheit aus den Referenzdaten und den Messdaten der Luftdruckmesswerte als Kontrolldaten das Gewicht der Zuladung errechnet.

## Beschreibung

Die Erfindung betrifft ein Überwachungssystem für luftbereifte Fahrzeuge, insbesondere Kraftfahrzeuge, bei dem die Räder mit programmierbaren elektronischen Sensoren für den Luftdruck des Reifens ausgestattet sind, welche ihre Messdaten jeweils an eine elektronische Datenverarbeitungseinheit senden, in welcher die Messdaten mit bereits gespeicherten Referenzdaten in Beziehung gesetzt und zur Erstellung und Anzeige von Kontrolldaten verarbeitet werden.

Aus DE 10 2007 011 678 ist es bereits bekannt, Daten eines Überwachungssystems einer Kraftfahrzeugkomponente mit einem Kommunikationsmodul des Kraftfahrzeugs auszutauschen, um bestimmte Zustände der Fahrzeugkomponenten kenntlich zu machen. Beispielsweise ist hierzu ein Reifen-Druck-Kontrollsystem (RDKS) erwähnt, bei dem alle Reifen des Kraftfahrzeugs mit Sensoren versehen sind, die den inneren Reifendruck ermitteln und mittels eines Senders drahtlos an das Kommunikationsmodul übertragen. Diese Daten können vom Fahrzeugbenutzer im Kommunikationsmodul abgerufen und in einem Display angezeigt werden.

Auch aus DE 198 56 898 A1 ist eine Anordnung bekannt, die zum Übertragen von Signalen benutzt wird, welche in einer Einrichtung zum Überwachen des Reifendrucks an Fahrzeugrädern erzeugt und an ein Auswertegerät gesendet werden. Ein mit einem Mikroprozessor ausgestattetes Auswerte- und Steuergerät ist dafür vorgesehen, die Informationen über den Reifendruck und ggf. Warnsignale am Armaturenbrett des Fahrzeugs anzuzeigen.

Es ist bekannt, dass mangelhafte Kraftfahrzeugreifen zu den häufigsten Pannen- und Unfallursachen zählen, wobei als Hauptursache von Reifenschäden ein zu niedriger Reifendruck ermittelt worden ist. Um diese Ursache zu beheben, werden im Handel Reifenkontrollsysteme (Tire Pressure Monitoring System TPMS) angeboten, mit denen es möglich ist, mehrere elektronische Reifendrucksensoren an Busreifen, LKW-Reifen und Anhängerreifen in einen Verstärker einzuprogrammieren. Auf dem Display eines dazugehörigen Handgerätes kann der Fahrer jederzeit ablesen bzw. kontrollieren, ob die Reifen seines Fahrzeugs oder Fahrzeuganhängers den vorgeschriebenen Luftdruck aufweisen (siehe hierzu Katalog Conrad Business 2009 Seite 507).

Die DE 103 21 235 A1 beschreibt ein Verfahren und eine Vorrichtung, die eine Steuerung, einen Luftkompressor, ein Lastüberwachungssystem, Umgebungstemperatursensoren, Fahreranzeigeeinrichtungen sowie ein Reifenaufpumpsystem verwenden, um Reifendrücke für ein Fahrzeug zu steuern und beizubehalten. Für die Ermittlung von Informationen über die Fahrzeugbeladung sind Drucksensoren und ein Positionssensor vorgesehen, die lastabhängige Daten eines luftunterstützten Luftfederungssystems zur Verfügung stellen. Während die Drucksensoren den Reifendrucksensoren ähnlich sein können, erfasst der Positionssensor die Position eines Fahrzeugrahmens relativ zu einer Achse. Aus den Daten der Drucksensoren und des Positionssensors wird durch Korrelation ein Fahrzeuglastwert ermittelt, der einem spezifischen Reifendruck entspricht, der in einer gespeicherten Kalibrierungstabelle hinterlegt ist.

Anhand dieser Kalibrierungstabelle wird für jedes Rad der seiner Belastung optimal entsprechende Reifendruck eingestellt.

Bei all diesen bekannten Systemen ist die Ermittlung und die Anzeige des Gewichts einer Zuladung nicht vorgesehen.

Der Erfindung liegt die Aufgabe zugrunde, ein Überwachungssystem für luftbereifte Fahrzeuge, insbesondere Kraftfahrzeuge der eingangs genannten Art zu schaffen, mit dem die Ermittlung des Gewichts von Zuladungen auf einfache Weise ohne zusätzliche Hilfsmittel ermittelt und dokumentiert werden kann.

Ausgehend von der Erkenntnis, dass sich der Reifendruck proportional zur jeweiligen Achslaständerung ändert, wird diese Aufgabe erfindungsgemäß dadurch gelöst, dass als Referenzdaten die Luftdruckmesswerte einzelner Reifen in einem Referenzzustand des Fahrzeugs in der Datenverarbeitungseinheit hinterlegt werden und dass als Messdaten die Luftdruckmesswerte derselben Reifen in einem vom Referenzzustand abweichenden, beladenen Kontrollzustand des Fahrzeugs in die Datenverarbeitungseinheit übertragen werden und dass die Datenverarbeitungseinheit aus den Referenzdaten und den Messdaten der Luftdruckmesswerte als Kontrolldaten das Gewicht der Zuladung errechnet.

Gewöhnlich werden die Referenzdaten dieser Art bei stillstehendem Fahrzeug aufgenommen.

Während es bisher erforderlich war, zur Ermittlung des Gewichts einer Zuladung eine Waage zu verwenden, bietet das erfindungsgemäße Überwachungssystem die Möglichkeit das Gewicht einer Zuladung anhand von Messdaten zu ermitteln, die von an sich bekannten und für andere Zwecke benutzten Messeinrichtungen zur Verfügung gestellt werden. Dabei kann das Gewicht der Zuladung während oder am Ende des Beladens abgerufen, d.h. zur Anzeige gebracht werden. Auch das Erzeugen von Warnsignalen bei Erreichen oder Überschreiten des zulässigen Höchstgewichts ist mit diesem Überwachungssystem ohne Weiteres möglich.

Als Referenzdaten können auch Reifendruckmesswerte dienen, die bei anderen Betriebszuständen des Fahrzeugs ermittelt worden sind, z.B. während einer Fahrt mit bestimmten Geschwindigkeiten.

Ein weiterer Vorteil dieses Überwachungssystems besteht bei Anwendung der Ausgestaltung nach Anspruch 2 darin, dass ungleiche Lastverteilungen auf den einzelnen Rädern ermittelt und angezeigt werden können.

Mit den gleichen Referenz- und Messdaten lassen sich nach den Ansprüchen 3 und 4 auch sicherheitsrelevante Kontrolldaten ermitteln und zur Verfügung stellen.

Gemäß Anspruch 5 lassen sich zudem zur Erhöhung der Aussagegenauigkeit Faktoren in die Berechnung mit einbeziehen, welche die Proportionalität des Reifendrucks zur Zuladung beeinflussen können.

Insgesamt ist das erfindungsgemäße Überwachungssystem auf einfache Weise vielfach einsetzbar und mit erprobten Bauelementen realisierbar.

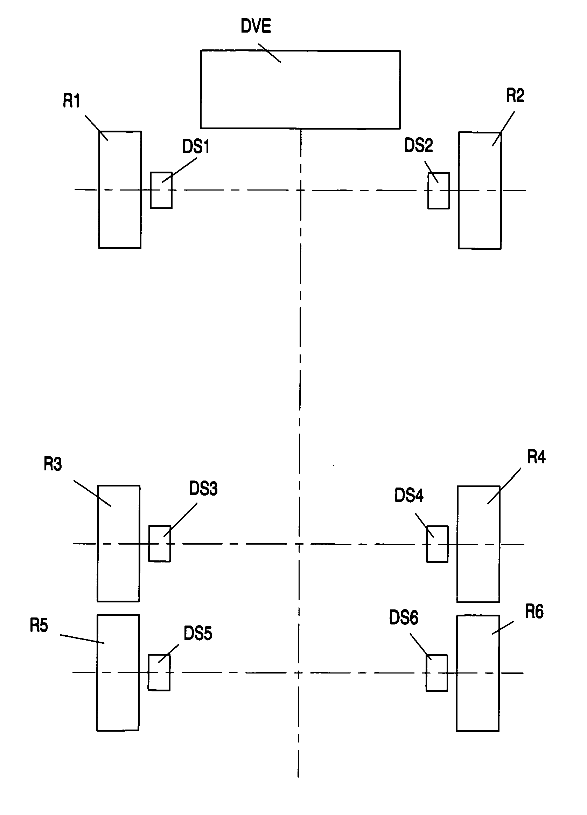

In der beiliegenden Zeichnung ist schematisch ein dreiachsiger LKW mit sechs luftbereiften Rädern dargestellt. Sowohl die beiden Vorderräder R1 und R2 als auch die Hinterräder R3, R4, R5 und R6 sind jeweils mit programmierbaren elektronischen Luftdrucksensoren DS1, DS2, DS3, DS4, DS5 und DS6 ausgestattet, welche laufend oder auf Abruf die Lüftdrücke in den Reifen der dargestellten Räder R1 bis R6 messen und die Druckmesswerte als elektronisch verarbeitbare Signale drahtlos, also per Funk, an eine z.B. im Fahrerhaus angeordnete elektronische Datenverarbeitungseinheit DVE übermitteln. Diese DVE enthält neben Datenempfangseinrichtungen, Bedienungseinrichtungen und einem Prozessor Daten- und Programmierspeicher sowie wenigstens eine Anzeigevorrichtung zur Anzeige von errechneten Ergebnissen in lesbarer Form und ggf. als Warnsignal.

Jedenfalls ist die DVE so ausgestattet und programmtechnisch so eingerichtet, dass sie in der Lage ist, die nachfolgend beschriebenen Vorgänge durchzuführen.

Die von den Luftdrucksensoren DS1 bis DS6 der einzelnen Räder R1 bis R6 bzw. Reifen dieser Räder R1 bis R6 kontinuierlich gemessenen und vorzugsweise auf Abruf an die DVE gesendeten Druckmessdaten werden dort empfangen und je nach Verwendungszweck als Referenzdaten wieder abrufbar in einem Speicher hinterlegt oder zur unmittelbaren Verarbeitung mit bereits hinterlegten Referenzdaten als Messdaten in den Verrechnungsprozess des Prozessrechners übernommen. Mit Hilfe der Bedienungseinrichtungen der DVE ist diese unterschiedliche Aufnahme der von den Luftdrucksensoren DS1 bis DS6 gelieferten Daten wählbar.

Zur Ermittlung des Gewichts einer auf die nicht dargestellte Ladepritsche des LKWs abgesetzten Zuladung ist es erforderlich als Referenzdaten die Luftdruckmesswerte der einzelnen Reifen der Räder R1 bis R6, die im unbeladenen Referenzzustand des LKWs gemessen worden sind zur Verfügung zu haben, um diese mit Druckluftmessdaten verrechnen zu können, die in einem beladenen Zustand des LKWs gemessen werden. Als Ergebnis dieser Verrechnung bringt die DVE als Kontrolldaten das Gewicht der Zuladung zur Anzeige. Selbstverständlich ist der Prozessrechner der DVE für die Durchführung dieser Verrechnung bzw. Umrechnung von Druckeinheiten in Gewichtseinheiten entsprechend programmiert.

Mit einem entsprechend eingerichteten Verrechnungsprogramm ist es auch möglich, das auf die einzelnen Reifen bzw. Räder R1 bis R6 verteilte Gewicht der Zuladung zu berechnen und anzuzeigen, damit, wenn nötig, eine gleichmäßige Gewichtsverteilung vorgenommen werden kann.

Unter Einbeziehung von vorgegebenen oder laufend gemessenen Fahrgeschwindigkeitswerten ist es auf diese Weise auch möglich, den vom Gewicht des Fahrzeugs und der gefahrenen Geschwindigkeit abhängige Bremsweg und/oder der von einem vorausfahrenden Fahrzeug einzuhaltende Mindestabstand zu berechnen und zur Anzeige zu bringen.

Wenn man, was ohne Weiteres möglich ist, die sich während eines Bremsvorgangs ändernden Luftdruckwerte der einzelnen Reifen mittels eines Algorithmus zueinander in Beziehung setzt und/oder als Datenfolge aufzeichnet, lässt sich die Intensität und/oder der Verlauf eines Bremsvorgangs errechnen, was für Unfallauswertungen, bzw. Rekonstruktionen dienlich sein kann.

Der Vollständigkeit halber sei noch darauf hingewiesen, dass als Referenzdaten zu den Luftdruckmesswerten auch reifenspezifische Parameter, die das lastabhängige Luftdruckverhalten beeinflussen können und die als Kenndaten in der Datenverarbeitungseinheit hinterlegt sind, in die Berechnung der Kontrolldaten einbezogen werden können.

## Patentansprüche

1. Überwachungssystem für luftbereifte Fahrzeuge, insbesondere Kraftfahrzeuge, bei denen die Räder (R1 bis R6) mit programmierbaren elektronischen Sensoren (SDS1 bis DS6) für den Luftdruck des Reifens ausgestattet sind, welche ihre Messdaten jeweils an eine elektronische Datenverarbeitungseinheit senden, in welcher die Messdaten mit bereits gespeicherten Referenzdaten in Beziehung gesetzt und zur Erstellung und Anzeige von Kontrolldaten verarbeitet werden ,
**dadurch gekennzeichnet,**
**dass** als Referenzdaten die Luftdruckmesswerte einzelner Reifen in einem Referenzzustand des Fahrzeugs in der Datenverarbeitungseinheit (DVE) hinterlegt werden und dass als Messdaten die Luftdruckmesswerte derselben Reifen in einem vom Referenzzustand abweichenden, beladenen Kontrollzustand des Fahrzeugs in die Datenverarbeitungseinheit übertragen werden und dass die Datenverarbeitungseinheit aus den Referenzdaten und den Messdaten der Luftdruckmesswerte als Kontrolldaten das Gewicht der Zuladung errechnet.

2. Überwachungssystem nach Anspruch 1, **dadurch gekennzeichnet, dass** als Kontrolldaten das auf die einzelnen Reifen verteilte Gewicht der Zuladung errechnet wird.

3. Überwachungssystem nach Anspruch 1, **dadurch gekennzeichnet, dass** als Kontrolldaten unter Einbeziehung von vorgegebenen oder laufend gemessenen Fahrgeschwindigkeitswerten der Bremsweg und/oder der von einem vorausfahrenden Fahrzeug einzuhaltende Mindestabstand errechnet wird.

4. Überwachungssystem nach Anspruch 1, **dadurch gekennzeichnet, dass** als Kontrolldaten die Intensität und/oder der Verlauf eines Bremsvorgangs errechnet werden.

5. Überwachungssystem nach Anspruch 1, **dadurch gekennzeichnet, dass** als Referenzdaten zu den Luftdruckmesswerten reifenspezifische Parameter, die das lastabhängige Luftdruckverhalten beeinflussen können und die als Kenndaten in der Datenverarbeitungseinheit hinterlegt sind, in die Berechnung der Kontrolldaten einbezogen werden.
